# FASCICULE DE BREVET EUROPEEN

(11) **EP 1 179 688 B1**
(45) Date de publication et mention de la délivrance du brevet: **26.05.2004**
(21) Numéro de dépôt: 01401989.7
(22) Date de dépôt: 24.07.2001
(51) Int. Cl.: F16F 13/14, F16F 13/18

(54) **Manchon anti-vibratoire hydraulique**
Hydraulisches, schwingungsisolierendes Buchsenlager
Hydraulic anti-vibration bush

(30) Priorité: 31.07.2000 FR 0010049
(43) Date de publication de la demande: 13.02.2002
(73) Titulaire: HUTCHINSON, 75008 Paris (FR)
(72) Inventeur: Bouhier, Bernard, 41140 Noyers sur Cher (FR); Seibert Sandt, Frédéric, 45160 Olivet (FR)
(74) Mandataire: Burbaud, Eric

(56) Documents cités:
- EP-A- 0 411 997
- US-A- 5 188 346
- US-A- 5 320 332
- US-A- 5 975 509
- PATENT ABSTRACTS OF JAPAN vol. 1999, no. 11, 30 septembre 1999 (1999-09-30) & JP 11 148531 A (TOKAI RUBBER IND LTD), 2 juin 1999 (1999-06-02)
- PATENT ABSTRACTS OF JAPAN vol. 012, no. 495 (M-780), 23 décembre 1988 (1988-12-23) & JP 63 214531 A (BRIDGESTONE CORP), 7 septembre 1988 (1988-09-07)

## Description

La présente invention est relative aux manchons antivibratoires hydrauliques.

Plus particulièrement, l'invention concerne un manchon antivibratoire hydraulique comportant :
- une armature intérieure rigide qui s'étend longitudinalement selon un axe central entre deux extrémités axiales,
- une armature extérieure rigide annulaire, qui entoure l'armature intérieure,
- un corps en élastomère reliant entre elles les armatures intérieure et extérieure, ce corps en élastomère comprenant
   . une première paroi épaisse en élastomère qui est adaptée pour supporter une charge permanente ayant une valeur comprise dans un certain domaine de fonctionnement et appliquée entre les armatures intérieure et extérieure parallèlement à une direction principale de vibration perpendiculaire audit axe central, cette première paroi épaisse en élastomère présentant une partie centrale solidarisée avec l'armature intérieure et une partie périphérique solidarisée avec l'armature extérieure en délimitant partiellement une première chambre de travail remplie de liquide,
   . une deuxième paroi épaisse en élastomère qui présente une partie périphérique solidarisée avec l'armature extérieure et qui délimite une deuxième chambre de travail remplie de liquide,
- une chambre de compensation remplie de liquide, qui est délimitée par au moins une première paroi souple en élastomère, aisément déformable et plus mince que lesdites première et deuxième parois épaisses en élastomère,
- un premier passage étranglé qui fait communiquer la première chambre de travail avec la chambre de compensation,
- et un deuxième passage étranglé qui fait communiquer la deuxième chambre de travail avec l'une des deux autres chambres, les premier et deuxième passages étranglés étant dimensionnés pour présenter respectivement des première et deuxième fréquences de résonance différentes.

Le document EP-A-0 411 997 décrit un exemple d'un tel manchon, dans lequel la deuxième chambre de travail est délimitée partiellement par la première paroi épaisse du corps en élastomère, tandis que la deuxième paroi épaisse du corps en élastomère sépare les deux chambres de travail. Dans ce manchon antivibratoire connu, la chambre de compensation, qui communique dans ce cas avec les deux chambres de travail, est disposée de façon diamétralement opposée à la chambre de travail et la paroi souple en élastomère qui délimite cette chambre de compensation est formée d'une seule pièce avec le corps en élastomère. Cette paroi souple est indépendante de l'armature intérieure et présente une partie périphérique solidarisée avec l'armature extérieure.

Ce manchon antivibratoire de l'art antérieur donne entière satisfaction, en ce sens que les deux chambres de travail et les deux passages étranglés permettent un amortissement spécialement efficace des vibrations au voisinage des deux fréquences de résonance des passages étranglés.

Le fonctionnement de ces manchons antivibratoires connus est toutefois indépendant de la charge statique appliquée entre les armatures intérieure et extérieure. Or, dans certains cas, il peut s'avérer utile de différencier le fonctionnement du manchon antivibratoire selon la charge statique appliquée entre les deux armatures.

La présente invention a notamment pour but de résoudre ce problème technique.

A cet effet, selon l'invention, un manchon antivibratoire du genre en question est caractérisé en ce que la deuxième chambre de travail est diamétralement opposée à la première chambre de travail par rapport à l'axe central, les deux chambres de travail étant sensiblement alignées selon la direction principale de vibration, la deuxième paroi épaisse en élastomère présentant une partie centrale libre qui est disposée au voisinage de l'armature intérieure et qui est indépendante de ladite armature intérieure,
et en ce que le corps en élastomère est dimensionné :
- pour que la partie centrale libre de la deuxième paroi en élastomère soit au contact (direct ou indirect) de l'armature intérieure lorsque ladite charge statique est comprise dans une première plage de valeurs appartenant audit domaine de fonctionnement,
- et pour que ladite partie centrale libre de la deuxième paroi épaisse en élastomère soit séparée de l'armature intérieure par un espace libre lorsque la charge statique est comprise dans une deuxième plage de valeurs complémentaire de la première plage de valeurs dans le domaine de fonctionnement.

Grâce à ces dispositions, lorsque la charge statique est comprise dans la première plage de valeurs, les mouvements vibratoires relatifs entre les deux armatures du manchon entraînent des déformations des deux chambres de travail et donc des transferts de liquide entre chacune des chambres de travail et la chambre correspondante par l'intermédiaire des passages étranglés : dans ce premier mode de fonctionnement, on obtient un amortissement spécialement efficace notamment pour des fréquences de vibration voisines de la deuxième fréquence de résonance.

En revanche, lorsque la charge statique est dans la deuxième plage de valeurs, seule la première chambre de travail est influencée par les mouvements vibratoires relatifs entre les deux armatures du manchon, de sorte que les transferts de liquide ont lieu principalement entre ladite première chambre de travail et la chambre de compensation par l'intermédiaire du premier passage étranglé : dans ce deuxième mode de fonctionnement, on amortit efficacement les vibrations de fréquences voisines de la première fréquence de résonance.

Dans des modes de réalisation préférés de l'invention, on peut éventuellement avoir recours en outre à l'une et/ou à l'autre des dispositions suivantes :
- le deuxième passage étranglé relie entre elles les première et deuxième chambres de travail ;
- la chambre de compensation est adjacente au moins à la deuxième chambre de travail et est partiellement délimitée par la deuxième paroi épaisse en élastomère ;
- la chambre de compensation présente une forme générale en U et comporte :
   . des première et deuxième parties latérales qui sont disposées de part et d'autre de la deuxième chambre de travail et qui sont partiellement délimitées au moins par la deuxième paroi épaisse en élastomère, lesdites première et deuxième parties latérales étant délimitées, vers les extrémités axiales de l'armature intérieure, respectivement par la première paroi souple en élastomère et par une deuxième paroi souple en élastomère, chacune des première et deuxième parois souples en élastomère étant reliée au moins à l'armature extérieure ;
   . et une partie centrale qui s'étend sensiblement parallèlement à l'axe central entre lesdites deux parties latérales ;
- les première et deuxième parois souples en élastomère sont moulées d'une seule pièce avec la deuxième paroi épaisse en élastomère ;
- l'espace libre séparant la deuxième paroi épaisse en élastomère et l'armature intérieure est rempli d'air et communique avec l'atmosphère ;
- les première et deuxième parois souples en élastomère sont des pièces annulaires distinctes du corps en élastomère, qui sont reliées chacune aux armatures intérieure et extérieure, les parties latérales de la chambre de compensation étant annulaires et adjacentes aux deux chambres de travail et la partie centrale de ladite chambre de compensation comprenant l'espace libre entre la deuxième paroi épaisse en élastomère et l'armature intérieure ;
- le corps en élastomère comporte une partie centrale pleine qui s'étend angulairement autour de l'armature intérieure, depuis la première chambre de travail jusqu'à la deuxième chambre de travail, le deuxième passage étranglé étant ménagé dans ladite partie centrale pleine ;
- la partie centrale de la chambre de compensation est reliée angulairement à la première chambre de travail par un passage supplémentaire ménagé entre le corps en élastomère et l'armature extérieure, ce passage étant normalement obturé par une nervure souple en élastomère qui fait saillie radialement vers l'extérieur à partir du corps en élastomère jusqu'à un bord libre placé au contact de l'armature extérieure, cette nervure souple étant dimensionnée pour se rabattre en ouvrant ledit passage supplémentaire entre la partie centrale de la chambre de compensation et la première chambre de travail lorsqu'il règne entre ces deux chambres une différence de pression supérieure à une valeur prédéterminée.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue en coupe longitudinale verticale d'un manchon antivibratoire selon une première forme de réalisation de l'invention,
- la figure 2 est une vue en coupe transversale du manchon de la figure 1, la coupe étant prise selon la ligne II - II de la figure 1,
- les figures 3 et 4 sont des vues du corps en élastomère et de l'armature intérieure du manchon des figures 1 et 2, respectivement selon les directions III et IV de la figure 2,
- la figure 5 est une vue similaire à la figure 1, représentant le manchon antivibratoire dans un deuxième état de fonctionnement,
- et la figure 6 est une vue similaire à la figure 1, dans une deuxième forme de réalisation de l'invention.

Sur les de figures, les mêmes références désignent des éléments identiques ou similaires.

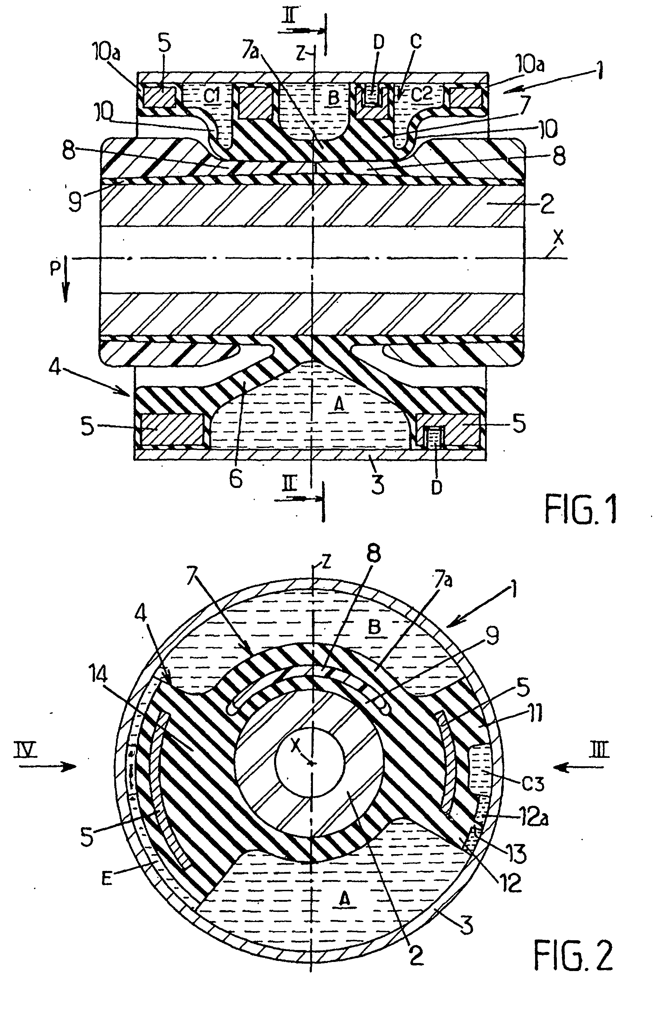

Les figures 1 et 2 représentent un manchon antivibratoire hydraulique 1 qui comporte une armature intérieure rigide 2 généralement réalisée en métal, qui s'étend longitudinalement selon un axe central X, entre les deux extrémités axiales du manchon.

Cette armature intérieure est entourée par une armature extérieure cylindrique 3 également réalisée en métal, qui s'étend longitudinalement selon l'axe X et qui entoure ladite armature intérieure.

Les armatures 2, 3 sont reliées entre elles par un corps en élastomère 4 qui est surmoulé et adhérisé sur l'armature intérieure 2 et qui comporte à sa périphérie extérieure une cage ajourée rigide 5, généralement métallique, permettant un emboîtement serré entre le corps en élastomère 5 et l'armature extérieure 3 (le serrage entre la périphérie du corps en élastomère et l'armature extérieure peut notamment être obtenu par un rétreint imposé à l'armature extérieure après emboîtement du corps en élastomère).

Le corps en élastomère 4 relie ainsi entre elles les armatures intérieure 2 et extérieure 3, qui peuvent être fixées par exemple respectivement à la caisse d'un véhicule automobile et à l'un des trains de ce véhicule. Bien entendu, cette application n'est pas limitative, et le manchon antivibratoire pourra être utilisé pour relier entre elles d'autres parties d'un véhicule automobile, y compris le cas échéant pour relier le bloc motopropulseur à la caisse du véhicule.

Le manchon antivibratoire 1 permet, d'une part, de supporter une charge verticale permanente P, par exemple une partie du poids du véhicule, cette charge statique étant exercée par exemple sur l'armature intérieure 2, et d'autre part, d'amortir des vibrations notamment dans la direction verticale Z constituant la direction principale de vibration.

A cet effet, le corps en élastomère 4 délimite avec l'armature extérieure, trois chambres hydrauliques, savoir deux chambres de travail A, B et une chambre de compensation C.

La chambre de travail A est délimitée par une première paroi épaisse 6 en élastomère qui est adaptée pour supporter ladite charge statique P et qui est conformée pour donner à la chambre A la forme d'une cloche évasée verticalement vers le bas en direction de l'armature extérieure.

Par ailleurs, la chambre de travail B est diamétralement opposée à la chambre de travail A par rapport à l'axe central X et présente par exemple une forme évasée vers le haut jusqu'à l'armature extérieure 3.

Cette chambre de travail B est délimitée par une paroi épaisse 7 appartenant au corps en élastomère, ladite paroi 7 étant indépendante de l'armature intérieure et présentant une partie centrale 7a libre qui est disposée au voisinage de l'armature intérieure 2.

Dans certaines plages de valeurs de la charge statique P, ladite partie centrale 7a de la paroi 7 en élastomère est en contact avec l'armature intérieure 2 par l'intermédiaire d'inserts rigides en matière plastique 8 emboîtés autour d'une couche d'élastomère 9 elle-même surmoulée autour de l'armature intérieure 2.

Par ailleurs, la chambre de compensation C, qui est bien visible sur les figures 1, 3 et 4, est adjacente à la chambre de travail B et présente une conformation générale en forme de U avec deux parties latérales C1, C2 qui sont disposées de part et d'autre de la chambre B dans la direction X et qui sont reliées entre elles par une partie centrale C3 s'étendant parallèlement à l'axe X entre les deux parties latérales C1, C2.

Chacune des parties latérales C1, C2 est délimitée entre :
- l'armature extérieure 3,
- une partie latérale de la paroi épaisse 7 en élastomère,
- et une paroi souple 10 en élastomère (voir la figure 2), nettement plus mince et flexible que les parois épaisses 6 et 7, chacune des parois souples 10 s'étendant entre, d'une part, la partie centrale 7a de la paroi épaisse 7 en élastomère, et d'autre part, une partie extérieure 10a qui est renforcée par la cage ajourée 5 et qui est en contact étanche avec l'armature extérieure 3.

Par ailleurs, la partie centrale C3 de la chambre de compensation est séparée angulairement de la chambre de travail B par une partie pleine 11 appartenant au corps en élastomère qui est appliquée en contact étanche contre l'armature extérieure 3.

De plus, la partie centrale C3 de la chambre de compensation est séparée de la chambre de travail A par une partie pleine 12 en élastomère (voir la figure 2) qui ne s'étend pas jusqu'au contact direct de l'armature extérieure 3, mais qui comporte une nervure 13 s'étendant radialement jusqu'à une extrémité libre se trouvant normalement en contact étanche avec la surface intérieure de l'armature extérieure 3. Cette nervure 13 est toutefois adaptée pour se rabattre en ouvrant un passage direct 12a entre les chambres de travail A et de compensation C lorsqu'il règne entre ces deux chambres une différence de pression supérieure à une valeur prédéterminée. On limite ainsi les surpressions dans la chambre de travail, et on peut également utiliser la nervure 13 comme un clapet de découplage adapté pour filtrer les vibrations de faible amplitude (par exemple inférieure à 1 mm) et de haute fréquence (par exemple supérieure à 20 Hz).

Par ailleurs, la partie centrale C3 de la chambre de compensation communique également avec la chambre de travail A par l'intermédiaire d'un passage étranglé D qui se présente sous la forme d'une gorge ménagée à la périphérie du corps en élastomère, la forme de cette gorge étant de préférence déterminée au moins partiellement par la cage ajourée 5.

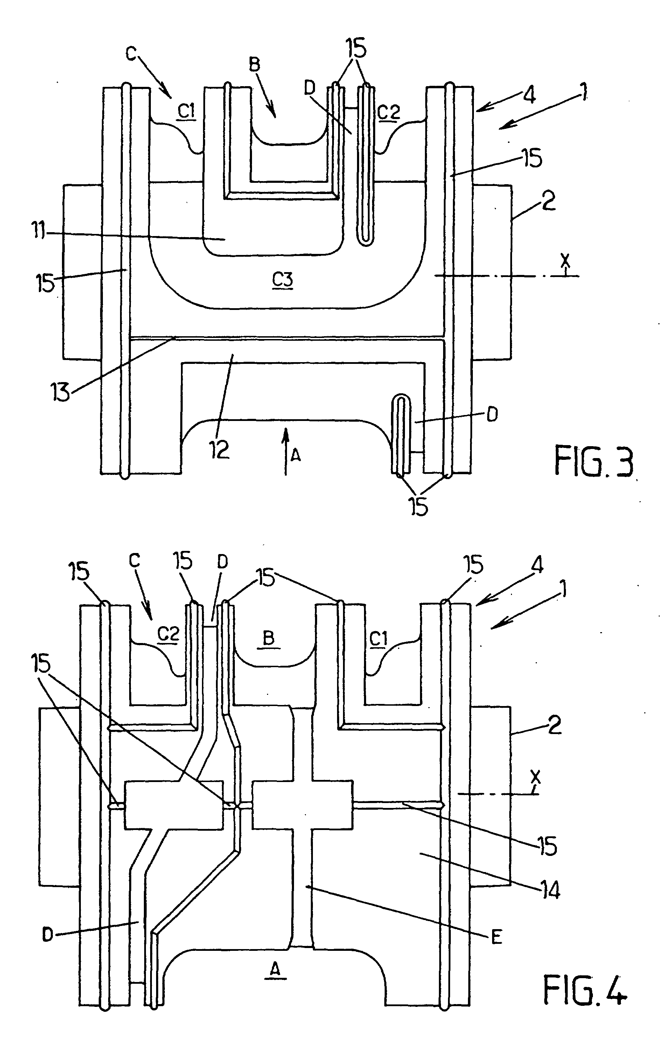

Enfin, comme on peut le voir sur les figures 2 et 4, les chambres de travail A, B sont reliées entre elles par un deuxième passage étranglé E qui est ménagé à la périphérie extérieure d'une partie pleine 14 du corps en élastomère venant jusqu'au contact de l'armature extérieure 3, cette partie pleine 14 séparant également la chambre de travail A et la chambre de compensation C dans la direction circonférentielle.

Sur les figures 3 et 4, on notera que des lèvres d'étanchéité en saillie 15 peuvent être avantageusement prévues à la surface extérieure du corps en élastomère 5 afin d'améliorer l'étanchéité du contact entre ledit corps en élastomère et l'armature extérieure 3.

Le manchon antivibratoire qui vient d'être décrit fonctionne comme suit.

Lorsque la charge statique P appliquée entre les armatures 2 et 3 est suffisamment faible, l'armature intérieure 2 reste en contact avec la paroi épaisse 7 qui délimite la chambre de travail B, comme représenté sur les figures 1 et 2.

Dans ce premier état de fonctionnement, les mouvements vibratoires verticaux relatifs entre les deux armatures 2, 3 entraînent des variations de volume des deux chambres de travail A, B et donc des transferts de liquide entre ces deux chambres par l'intermédiaire du passage étranglé E, qui présente une certaine fréquence de résonance.

Dans ce premier état de fonctionnement, le manchon antivibratoire permet donc d'amortir les vibrations de façon particulièrement efficace au voisinage de cette fréquence de résonance.

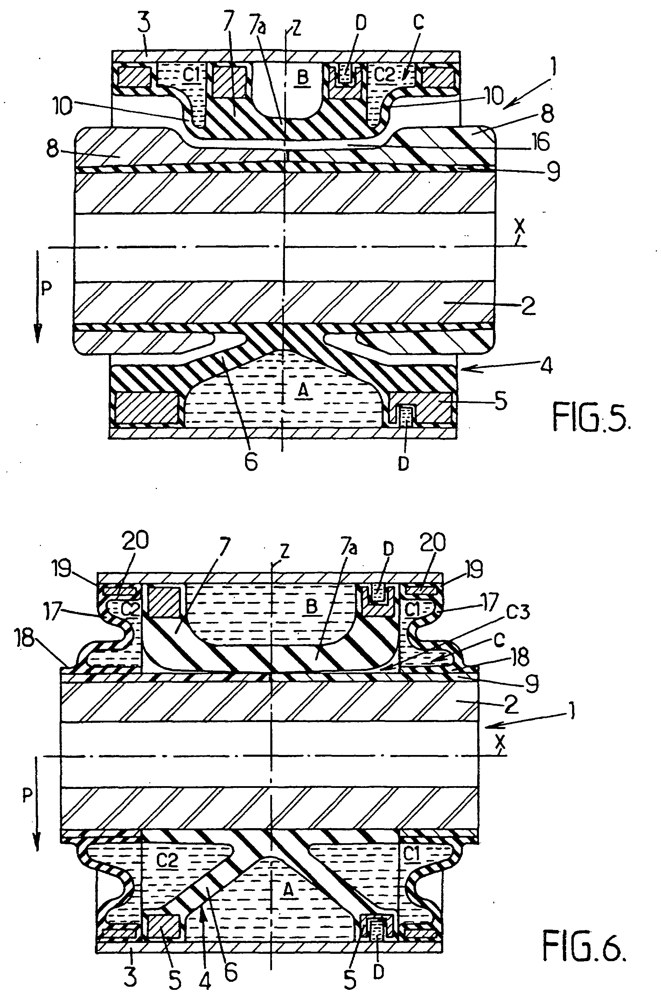

En revanche, lorsque la charge statique P appliquée à l'armature intérieure 2 est plus importante, comme représenté sur la figure 5, l'armature intérieure 2 n'est plus en contact avec la partie centrale 7a de la paroi épaisse 7 et la partie centrale 7a de cette paroi épaisse est séparée des inserts 8 par un espace libre 16 communiquant avec l'atmosphère, de sorte que la chambre de travail B n'est plus influencée par les mouvements vibratoires relatifs entre les deux armatures 2, 3.

Dans ce mode de fonctionnement, ces mouvements vibratoires engendrent donc des variations de volume de la chambre de travail A mais pas de variations de volume de la chambre de travail B.

Ces variations de volume de la chambre de travail A génèrent des transferts de liquide entre cette chambre de travail et la chambre de compensation C par l'intermédiaire du passage étranglé D, qui présente des dimensions différentes du passage étranglé E et donc une fréquence de résonance différente de la fréquence de résonance du passage E.

Dans ce deuxième état de fonctionnement, le manchon antivibratoire 1 permet donc d'amortir spécialement efficacement les vibrations qui présentent une fréquence voisine de la fréquence de résonance du passage D.

La deuxième forme de réalisation de l'invention, qui est représentée sur la figure 6, présente une structure et un fonctionnement similaire à la première forme de réalisation décrite ci-dessus, de sorte que cette deuxième forme de réalisation ne sera pas décrite en détail ci-après.

Cette deuxième forme de réalisation de l'invention se distingue de la première forme de réalisation par les points suivants :
- les parois souples en élastomère 17 ne sont plus formées d'une seule pièce avec le corps en élastomère 4, mais sont constituées par deux couronnes d'élastomère rapportées, en forme de soufflets, qui s'étendent chacun radialement entre une bague intérieure 18 adhérisée sur la couche centrale 9 du corps en élastomère et une bague extérieure 19 renforcée par un anneau métallique rigide 20 et emboîtée à force dans l'armature extérieure 3,
- les parties latérales C1, C2 de la chambre de compensation sont annulaires et s'étendent tout autour de l'armature intérieure 2 en jouxtant ainsi les deux chambres de travail A, B,
- et la partie centrale C3 de la chambre de compensation comprend l'espace qui sépare radialement la partie centrale 7a de la paroi 7 en élastomère et la couche centrale 9 du corps en élastomère lorsque ladite partie centrale 7a n'est plus en contact avec l'armature intérieure 2 du manchon.

## Revendications

1. Manchon antivibratoire hydraulique comportant :
- une armature intérieure rigide (2) qui s'étend longitudinalement selon un axe central (X) entre deux extrémités axiales,
- une armature extérieure rigide (3) annulaire, qui entoure l'armature intérieure,
- un corps en élastomère (4) reliant entre elles les armatures intérieure et extérieure, ce corps en élastomère comprenant
. une première paroi épaisse (6) en élastomère qui est adaptée pour supporter une charge permanente (P) ayant une valeur comprise dans un certain domaine de fonctionnement et appliquée entre les armatures intérieure et extérieure (2, 3) parallèlement à une direction principale de vibration (Z) perpendiculaire audit axe central (X), cette première paroi épaisse (6) en élastomère présentant une partie centrale solidarisée avec l'armature intérieure (2) et une partie périphérique solidarisée avec l'armature extérieure (3) en délimitant partiellement une première chambre de travail (A) remplie de liquide,
. une deuxième paroi épaisse en élastomère (7) qui présente une partie périphérique solidarisée avec l'armature extérieure et qui délimite une deuxième chambre (B) de travail remplie de liquide,
- une chambre de compensation (C) remplie de liquide, qui est délimitée par au moins une première paroi souple (10, 17) en élastomère, aisément déformable et plus mince que lesdites première et deuxième parois épaisses (6, 7) en élastomère,
- un premier passage étranglé (D) qui fait communiquer la première chambre de travail (A) avec la chambre de compensation (C),
- et un deuxième passage étranglé (E) qui fait communiquer la deuxième chambre de travail (B) avec l'une (A) des deux autres chambres, les premier et deuxième passages étranglés (D, E) étant dimensionnés pour présenter respectivement des première et deuxième fréquences de résonance différentes,
**caractérisé en ce que** la deuxième chambre de travail (B) est diamétralement opposée à la première chambre de travail (A) par rapport à l'axe central (X), les deux chambres de travail étant sensiblement alignées selon la direction principale de vibration (Z), la deuxième paroi épaisse (7) en élastomère présentant une partie centrale libre (7a) qui est disposée au voisinage de l'armature intérieure (2) et qui est indépendante de ladite armature intérieure,
et **en ce que** le corps en élastomère est dimensionné :
- pour que la partie centrale libre (7a) de la deuxième paroi en élastomère soit au contact de l'armature intérieure (2) lorsque ladite charge statique (P) est comprise dans une première plage de valeurs appartenant audit domaine de fonctionnement,
- et pour que ladite partie centrale libre (7a) de la deuxième paroi épaisse en élastomère soit séparée de l'armature intérieure (2) par un espace libre (16) lorsque la charge statique (P) est comprise dans une deuxième plage de valeurs complémentaire de la première plage de valeurs dans le domaine de fonctionnement.

2. Manchon antivibratoire selon la revendication 1, dans lequel le deuxième passage étranglé (E) relie entre elles les première et deuxième chambres de travail (A, B).

3. Manchon antivibratoire selon la revendication 2, dans lequel la chambre de compensation (C) est adjacente au moins à la deuxième chambre de travail (B) et est partiellement délimitée par la deuxième paroi épaisse (7) en élastomère.

4. Manchon antivibratoire selon la revendication 3, dans lequel la chambre de compensation (C) présente une forme générale en U et comporte :
- des première et deuxième parties latérales (C1, C2) qui sont disposées de part et d'autre de la deuxième chambre de travail (B) et qui sont partiellement délimitées au moins par la deuxième paroi épaisse (7) en élastomère, lesdites première et deuxième parties latérales (C1, C2) étant délimitées, vers les extrémités axiales de l'armature intérieure, respectivement par la première paroi souple (10, 17) en élastomère et par une deuxième paroi souple (10, 17) en élastomère, chacune des première et deuxième parois souples en élastomère étant reliée au moins à l'armature extérieure,
- et une partie centrale (C3) qui s'étend sensiblement parallèlement à l'axe central (X) entre lesdites deux parties latérales (C1, C2).

5. Manchon antivibratoire selon la revendication 4, dans lequel les première et deuxième parois souples (10) en élastomère sont moulées d'une seule pièce avec la deuxième paroi épaisse (7) en élastomère.

6. Manchon antivibratoire selon l'une quelconque des revendications 4 et 5, dans lequel l'espace libre (16) séparant la deuxième paroi épaisse (7) en élastomère et l'armature intérieure (2) est rempli d'air et communique avec l'atmosphère.

7. Manchon antivibratoire selon la revendication 4, dans lequel les première et deuxième parois souples (17) en élastomère sont des pièces annulaires distinctes du corps en élastomère (41), qui sont reliées chacune aux armatures intérieure et extérieure (2, 3), les parties latérales (C1, C2) de la chambre de compensation étant annulaires et adjacentes aux deux chambres de travail (A, B) et la partie centrale (C3) de ladite chambre de compensation comprenant l'espace libre entre la deuxième paroi épaisse (7) en élastomère et l'armature intérieure (2).

8. Manchon antivibratoire selon l'une quelconque des revendications 4 à 7, dans lequel le corps en élastomère (4) comporte une partie centrale pleine (14) qui s'étend angulairement autour de l'armature intérieure (2) depuis la première chambre de travail (A) jusqu'à la deuxième chambre de travail (B), le deuxième passage étranglé (E) étant ménagé dans ladite partie centrale pleine.

9. Manchon antivibratoire selon l'une quelconque des revendications 4 à 8, dans lequel la partie centrale (C3) de la chambre de compensation est reliée angulairement à la première chambre de travail (A) par un passage supplémentaire (12a) ménagé entre le corps en élastomère (4) et l'armature extérieure (B), ce passage étant normalement obturé par une nervure souple (13) en élastomère qui fait saillie radialement vers l'extérieur à partir du corps en élastomère jusqu'à un bord libre placé au contact de l'armature extérieure, cette nervure souple (13) étant dimensionnée pour se rabattre en ouvrant ledit passage supplémentaire (12) entre la partie centrale (C3) de la chambre de compensation et la première chambre de travail (A) lorsqu'il règne entre ces deux chambres une différence de pression supérieure à une valeur prédéterminée.

## Claims

1. A hydraulic antivibration sleeve comprising:
· a rigid inner strength member (2) extending longitudinally along a central axis (X) between two axial ends;
· an annular rigid outer strength member (3) which surrounds the inner strength member;
· an elastomer body (4) interconnecting the inner and outer strength members, said elastomer body comprising:
· a first thick elastomer wall (6) adapted to support a permanent load (P) of value lying in a certain operating domain and applied between the inner and outer strength members (2, 3) parallel to a main vibration direction (Z) perpendicular to said central axis (X), said first thick elastomer wall (6) presenting a central portion secured to the inner strength member (2) and a peripheral portion secured to the outer strength member (3), thereby defining part of a first liquid-filled working chamber (A); and
· a second thick elastomer wall (7) having a peripheral portion secured to the outer strength member and defining a second liquid-filled working chamber (B);
· a liquid-filled compensation chamber (C) defined by at least a first flexible elastomer wall (10, 17) that is easily deformable and thinner than said first and second thick elastomer walls (6, 7);
· a first constricted passage (D) putting said first working chamber (A) into communication with the compensation chamber (C); and
· a second constricted passage (E) putting the second working chamber (B) into communication with one of the other two chambers (A), the first and second constricted passages (D, E) being dimensioned to present respective first and second different resonant frequencies;
the sleeve being **characterized in that** the second working chamber (B) is diametrically opposite to the first working chamber (A) about the central axis (X), the two working chambers being substantially in alignment along the main direction of vibration (Z), the second thick elastomer wall (7) presenting a free central portion (7a) which is disposed in the vicinity of the inner strength member (2) and which is independent of said inner strength member; and
**in that** the elastomer body is so dimensioned:
· that the free central portion (7a) of the second elastomer wall is in contact with the inner strength member (2) when said static load (P) lies in a first range of values belonging to said operating domain; and
· that the free central portion (7a) of the second elastomer wall is separate from the inner strength member (2) by an empty space (16) when the static load (P) lies in a second range of values complementary to the first range of values in said operating domain.

2. An antivibration sleeve according to claim 1, in which the second constricted passage (E) interconnects the first and second working chambers (A, B).

3. An antivibration sleeve according to claim 2, in which the compensation chamber (C) is adjacent at least to the second working chamber (B) and is partially defined by the second thick elastomer wall (7).

4. An antivibration sleeve according to claim 3, in which the compensation chamber (C) is generally U-shaped and comprises:
· first and second side portions (C1, C2) which are disposed on either side of the second working chamber (B) and which are defined in part at least by the second thick elastomer wall (7), said first and second side portions (C1, C2) being defined towards the axial ends of the inner strength member respectively by a first flexible elastomer wall (10, 17) and by a second flexible elastomer wall (10, 17), each of the first and second flexible elastomer walls being connected at least to the outer strength member; and
· a central portion (C3) which extends substantially parallel to the central axis (X) between said two side portions (C1, C2).

5. An antivibration sleeve according to claim 4, in which the first and second flexible elastomer walls (10) are molded integrally with the second thick elastomer wall (7).

6. An antivibration sleeve according to claim 4 or claim 5, in which the empty space (16) between the second thick elastomer wall (7) and the inner strength member (2) is filled with air and communicates with the atmosphere.

7. An antivibration sleeve according to claim 4, in which the first and second flexible elastomer walls (17) are annular pieces distinct from the elastomer body (4), each of which pieces is connected to the inner and outer strength members (2, 3), the side portions (C1, C2) of the compensation chamber being annular and adjacent to the two working chambers (A, B), and the central portion (C3) of said compensation chamber comprising the empty space between the second thick elastomer wall (7) and the inner strength member (2).

8. An antivibration sleeve according to claims 4 to 7, in which the elastomer body (4) has a solid central portion (14) which extends angularly around the inner strength member (2) from the first working chamber (A) to the second working chamber (B), the second constricted passage (E) being formed in said solid central portion.

9. An antivibration sleeve according to any one of claims 4 to 8, in which the central portion (C3) of the compensation chamber is angularly connected to the first working chamber (A) via an additional passage (12a) formed between the elastomer body (4) and the outer strength member (3), said passage being normally closed by a flexible elastomer rib (13) projecting radially outwards from the elastomer body to a free edge placed in contact with the outer strength member, said flexible rib (13) being dimensioned to fold down and open said additional passage (12a) between the central portion (C3) of the compensation chamber and the first working chamber (A) when the pressure difference between these chambers is greater than a predetermined value.

## Patentansprüche

1. Hydraulisches, schwingungsisolierendes Buchsenlager mit
- einem starren Innenmantel (2), welcher sich in Längsrichtung nach einer zentralen Achse (X) zwischen zwei axialen Enden erstreckt,
- einem starren ringförmigen Außenmantel (3), welcher den Innenmantel umschließt,
- einem Elastomerkörper (4), welcher den Innen- und den Außenmantel miteinander verbindet, wobei dieser Elastomerkörper
• eine erste dicke Elastomerwandung (6), welche geeignet ist, eine Dauerlast (P) mit einem in einem bestimmten Betriebsbereich liegenden Wert zu tragen, welche zwischen dem Innen- und dem Außenmantel (2, 3) parallel zu einer senkrecht zur besagten zentralen Achse (X) verlaufenden Hauptschwingungsrichtung (Z) anliegt, wobei diese erste dicke Elastomerwandung (6) einen mit dem Innenmantel (2) fest verbundenen Zentralbereich und einen mit dem Außenmantel (3) fest verbundenen Umfangsbereich aufweist und dabei eine erste, mit Flüssigkeit gefüllte Arbeitskammer (A) teilweise abgrenzt,
• eine zweite dicke Elastomerwandung (7), welche einen mit dem Außenmantel fest verbundenen Umfangsbereich aufweist und eine zweite, mit Flüssigkeit gefüllte Arbeitskammer (B) abgrenzt,
• eine mit Flüssigkeit gefüllte Ausgleichskammer (C), welche von mindestens einer ersten flexiblen Elastomerwandung (10, 17) abgegrenzt ist, welche leicht verformbar und dünner ist als die erste und die zweite dicke Elastomerwandung (6, 7),
• einen ersten verengten Durchgang (D) zur Verbindung der ersten Arbeitskammer (A) mit der Ausgleichskammer (C) und
• einen zweiten verengten Durchgang (E) zur Verbindung der zweiten Arbeitskammer (B) mit einer (A) der zwei anderen Kammern, wobei der erste und der zweite verengte Durchgang (D, E) derart bemessen sind, dass sie eine erste beziehungsweise eine zweite jeweils unterschiedliche Resonanzfrequenz aufweisen, enthält,
**dadurch gekennzeichnet, dass** die zweite Arbeitskammer (B) der ersten Arbeitskammer (A) in Bezug auf die zentrale Achse (X) diametral entgegengesetzt angeordnet ist, wobei die zwei Arbeitskammern in der Hauptschwingungsrichtung (Z) weitestgehend fluchten, wobei die zweite dicke .Elastomerwandung (7) einen freien Zentralbereich (7a) aufweist, welcher in der Nähe des Innenmantels (2) angeordnet ist und von dem besagten Innenmantel unabhängig ist, und dass der Elastomerkörper derart bemessen ist, dass
- der freie Zentralbereich (7a) der zweiten Elastomerwandung mit dem Innenmantel (2) in Kontakt ist, wenn die besagte statische Last (P) in einem ersten, dem besagten Betriebsbereich zugehörigen Wertebereich liegt und
- der besagte freie Zentralbereich (7a) der zweiten dicken Elastomerwandung vom Innenmantel (2) durch einen Freiraum (16) getrennt ist, wenn die statische Last (P) in einem zweiten Wertebereich liegt, welcher den ersten Wertebereich im Betriebsbereich ergänzt.

2. Hydraulisches, schwingungsisolierendes Buchsenlager nach Anspruch 1, **dadurch gekennzeichnet, dass** der zweite verengte Durchgang (E) die erste und die zweite Arbeitskammer (A, B) miteinander verbindet.

3. Hydraulisches, schwingungsisolierendes Buchsenlager nach Anspruch 2, **dadurch gekennzeichnet, dass** die Ausgleichskammer (C) mindestens an der zweiten Arbeitskammer (B) anliegt und teilweise von der zweiten dicken Elastomerwandung (7) abgegrenzt ist.

4. Hydraulisches, schwingungsisolierendes Buchsenlager nach Anspruch 3, **dadurch gekennzeichnet, dass** die Ausgleichskammer (C) insgesamt U-förmig ausgebildet ist und
- ein erstes und ein zweites Seitenteil (C1, C2), welche beidseitig der zweiten Arbeitskammer (B) angeordnet sind und zumindest durch die zweite dicke Elastomerwandung (7) teilweise abgegrenzt sind, wobei das erste und das zweite Seitenteil (C1, C2) zu den axialen Enden des Innenmantels hin von der ersten flexiblen Elastomerwandung (10, 17) beziehungsweise von einer zweiten flexiblen Elastomerwandung (10, 17) abgegrenzt sind, wobei die erste und die zweite flexible Elastomerwandung jeweils zumindest mit dem Außenmantel verbunden sind und
- einen Zentralbereich (C3), welcher sich weitestgehend parallel zur zentralen Achse (X) zwischen den besagten zwei Seitenteilen (C1, C2) erstreckt,
aufweist.

5. Hydraulisches, schwingungsisolierendes Buchsenlager nach Anspruch 4, bei dem die erste und die zweite flexible Elastomerwandung (10) einstückig mit der zweiten dicken Elastomerwandung (7) geformt sind.

6. Hydraulisches, schwingungsisolierendes Buchsenlager nach einem beliebigen der Ansprüche 4 und 5, bei dem der Freiraum (16), welcher die zweite dicke Elastomerwandung (7) und den Innenmantel (2) trennt, mit Luft gefüllt ist und mit der Außenluft verbunden ist.

7. Hydraulisches, schwingungsisolierendes Buchsenlager nach Anspruch 4, bei dem die erste und die zweite flexible Elastomerwandung (17) ringförmige, vom Elastomerkörper (41) getrennte Teile sind, welche jeweils mit dem Innenund Außenmantel (2, 3) verbunden sind, wobei die Seitenteile (C1, C2) der Ausgleichskammer ringförmig ausgebildet sind und an den zwei Arbeitskammern (A, B) anliegen und wobei der Zentralbereich (C3) der besagten Ausgleichskammer den Freiraum zwischen der zweiten dicken Elastomerwandung (7) und dem Innenmantel (2) enthält.

8. Hydraulisches, schwingungsisolierendes Buchsenlager nach einem beliebigen der Ansprüche 4 bis 7, bei dem der Elastomerkörper (4) einen vollen Zentralbereich (14) aufweist, welcher sich winkelig um den Innenmantel (2) von der ersten Arbeitskammer (A) bis zur zweiten Arbeitskammer (B) erstreckt, wobei der zweite verengte Durchgang (E) in dem besagten vollen Zentralbereich ausgebildet ist.

9. Hydraulisches, schwingungsisolierendes Buchsenlager nach einem beliebigen der Ansprüche 4 bis 8, bei dem der Zentralbereich (C3) der Ausgleichskammer winkelig mit der ersten Arbeitskammer (A) über einen zusätzlichen, zwischen dem Elastomerkörper (4) und dem Außenmantel (B) ausgebildeten Durchgang (12a) verbunden ist, wobei dieser Durchgang normalerweise von einer flexiblen Elastomerrippe (13) verschlossen ist, welche vom Elastomerkörper aus bis zu einem freien, mit dem Außenmantel in Kontakt stehenden Rand radial nach außen ragt, wobei diese flexible Rippe (13) derart bemessen ist, dass sie sich umschlägt und dabei den zusätzlichen Durchgang (12) zwischen dem Zentralbereich (C3) der Ausgleichskammer und der ersten Arbeitskammer (A) öffnet, wenn zwischen diesen zwei Kammern ein einen vorbestimmten Wert übersteigenden Druckunterschied herrscht.
